# EUROPEAN PATENT APPLICATION

(11) **EP 1 968 052 A1**
(43) Date of publication of application: **10.09.2008**
(21) Application number: 07103506.7
(22) Date of filing: 05.03.2007
(51) Int. Cl.: G11B 7/09, G11B 7/095

(54) **Pickup for accessing moving storage media and drive having the pickup**

(71) Applicant: Deutsche Thomson OHG, 30625 Hannover (DE)
(72) Inventor: Bammert, Michael, 78739, Hardt (DE); Suzuki, Tsuneo, 78087, Mönchweiler (DE); Dupper, Rolf, 78050, Villingen-Schwenningen (DE)
(74) Representative: Thies, Stephan

(57) **Abstract**

A pickup (P) for accessing moving storage media (D) has a flat board unit (B) carrying coils (11, 12, 14). The flat board unit (B) is constituted by at least two printed circuit boards (9, 10). According to the invention at least one first printed circuit board (9) carries at least one coil (11, 12) of a first type of coils (11, 12) having a first sensitivity and at least one second printed circuit board (10) carries at least one coil (14) of a second type of coils (14) having a second sensitivity lower than the first.

## Description

### BACKGROUND OF THE INVENTION

### FIELD OF THE INVENTION

The present invention is related to a pickup for accessing moving storage media according to the preamble of claim 1 and a drive having the pickup. Pickups and drives with pickups are used as part of a recording and/or reproducing apparatus, e. g. of a DVD player, a DVD recorder or of similar apparatuses.

### DESCRIPTION OF THE PRIOR ART

A pickup for accessing moving storage media records and/or reproduces information with respect to the moving storage media carrying substantially parallel information tracks, namely a turning disk, while moving in the radial direction of the disk. In the pickup, typically one or more light beams are generated and focused onto a target or scanning spot on a layer within the disk. Readout light beams coming from the disk are projected onto a photo detector, where they are converted into electrical signals for further evaluation.

A pickup for accessing moving storage media, referred to as an optical pickup, is described in the US 2003/0012090 A1. The pickup has a movable part, with a lens and a coil unit, and a fixed part with a magnet circuit. The coil unit with a focus coil, a tracking coil and a tilt coil is disposed within a magnetic gap of the magnetic circuit. The movable part is supported on the fixed part by suspension elements, namely by suspension wires. The coil unit is constituted as a flat board unit with a required number of printed circuit boards. In order to adjust position errors, such a movable part with a lens can be driven in a focus direction orthogonal to the disk and a tracking direction orthogonal to the tracks, and can also correct a coma and astigmatism of a spot.

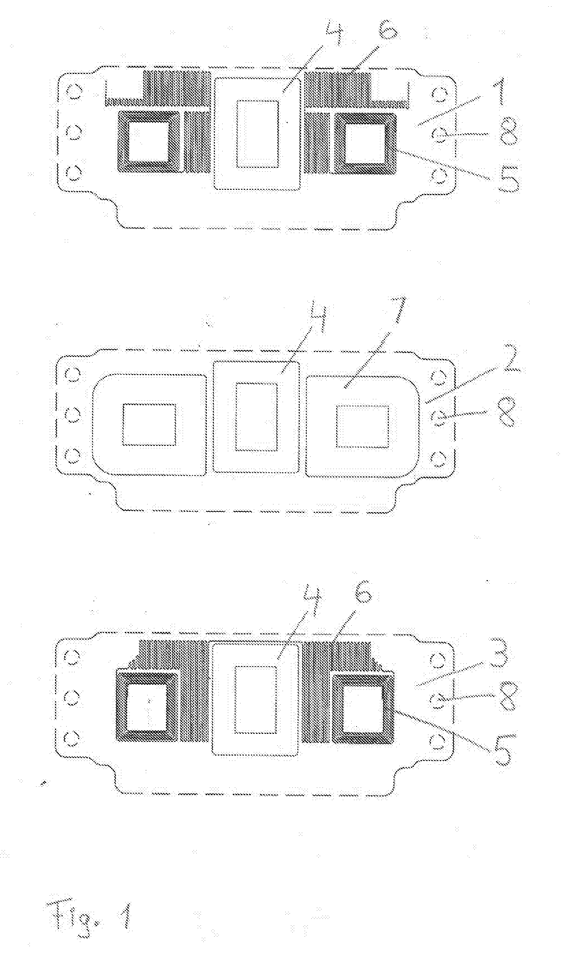

Figure 1 shows a flat board unit known by the applicant, which uses printed circuit boards. In particular, the flat board unit comprises a printed circuit board unit with three layers 1, 2 and 3. The first layer 1 comprises one face with one tracking coil 4 in the middle and two tilt coils 5 at opposite sides of the tracking coil 4, which have less turns and conducting leads 6. The second layer 2 comprises a front face with coils, shown in Figure 1, and an identically shaped back face, occluded in Figure 1. The faces each comprise a middle tracking coil 4 and two focus coils 7 at opposite sides of the tracking coil 4. The third layer 3 comprises one face with one tracking coil 4 in the middle and two tilt coils 5 at opposite sides of the tracking coil 4, which have less turns and conducting leads 6.

The two focus coils 7 are connected in series in a way that the forces caused by a current through the two focus coils 7 are directed in the same direction. As a result, the printed circuit board unit with the two focus coils 7 is moved in this direction. In contrast to this, each pair of tilt coils 5 arranged side by side are connected in series in a way that the forces caused by a current through the two tilt coils 5 are directed in opposite directions. As a result, the tilt coils 5, being moved in opposite directions, cause a rotation of the printed circuit board unit. The coils 4, 5, 6 of the four faces of the three layers 1, 2 and 3 of the printed circuit board unit are constituted as fine pattern coils.

Coils constituted as fine pattern coils provide coils with a very high sensitivity. Coils with a high sensitivity need a high number of windings per length unit and cause high manufacturing effort and parts costs. The sensitivity of the focus coils and the tracking coils should often be as high as possible while the sensitivity of the tilt coils should not be too high, i.e. the number of windings per length unit should not be too high. If the sensitivity of the tilt coils is too high, the pickup will be too sensitive, and unwanted tilt movements will occur unavoidably. A way to overcome this is to provide the tilt coils with less turns and to add external discrete resistance components. As an alternative for an external discrete resistance, the tilt coils 5, shown in Figure 1, have some lengths of magnetically neutral conducting leads 6 connected in series thereto.

Figure 1 also shows that each of the three layers 1, 2, 3 has three pairs of openings 8, where the openings 8 of each pair are arranged at opposite sides of the layers 1, 2, 3. The openings 8 of the three layers 1, 2, 3 correspond to each other, i.e. when the layers 1, 2, 3 are assembled to the printed circuit board unit, the openings 8 are congruent to each other in order to receive suspension elements.

### SUMMARY OF THE INVENTION

It is desirable to improve a pickup according to the preamble of claim 1 in order to reduce manufacturing effort and parts costs of the flat board unit.

According to the invention this is achieved by the features of claim 1. Possible advantageous developments of the invention are specified in the dependent claims.

A pickup for accessing moving storage medium has a flat board unit carrying coils, which is constituted by at least two printed circuit boards. According to the invention at least one first printed circuit board carries at least one coil of a first type of coils having a first sensitivity, and at least one second printed circuit board carries at least one coil of a second type of coils having a second sensitivity lower than the first sensitivity. The purpose of the invention is to define two different types of coils, which need different sensitivities for interacting with a magnet circuit, and to place the coils of the different types onto different printed circuit boards. As a result, the printed circuit boards with the different types of coils can be produced with different manufacturing processes. This avoids additional features, such as an additional resistance due to an external resistance component or due to additional conducting leads, on a printed circuit board with coils with different sensitivities. In addition, the manufacturing process for the second printed circuit boards with the second type of coils with the lower sensitivity can be simplified in comparison to that of the first printed circuit boards. As a result, the manufacturing effort and parts costs are reduced.

As an alternative of the invention, the producing process of the second printed circuit boards is an etching process and the coils of the second type are constituted as etched printed coils. It is easier and costs substantially less to constitute the coils by an etching process rather than a fine pattern process.

As an alternative of the invention, the producing process of the first printed circuit boards is a fine pattern process and the coils of the first type are constituted as fine pattern printed coils with a very high sensitivity.

Preferably for pickups where tilt motions with a lower sensitivity are desirable, the coils of the first type are constituted as focus and tracking coils and the coils of the second type are constituted as tilt coils.

Preferably, the second printed circuit boards with the coils of the second type are constituted as flexible boards, e.g. made by an elastic material. Manufacturing flexible boards with coils, preferably with etched coils, is a cheap manufacturing process and reduces the weight of the second printed circuit boards. Such second printed circuit boards constituted by a thinner, flexible material also shortens the distance of the first printed circuit boards to magnets of the magnet circuit. As a result, the sensitivity of the coils of the first printed circuit boards is increased.

Preferably, the pickup has a movable part and a fixed part, where the movable part comprises the flat board unit.

As an alternative, at least two printed circuit boards of the flat board unit each have at least one pair of openings for suspension elements, such as suspension wires, at opposite sides. The pairs of openings correspond to each other in order to align the printed circuit boards.

Preferably a moving storage media drive is provided with a pickup according to the invention.

In the drive a typical pickup as a whole, including a movable unit, a fixed unit and suspension elements, is movable and is being moved, so that all storage locations on the medium can be accessed, in a direction orthogonal to information tracks on the storage medium. In this way, accessing shall encompass reading access for reading information from the storage medium, or writing access for writing or recording information onto the storage medium, or combinations of reading and writing access.

One possible form of moving storage media is a disk carrying substantially parallel information tracks, namely concentric circular or spiral information tracks. The access of the disk is a reflective type where an access light beam is being generated and focused onto the information track and a reflected light beam, coming back from and being modulated by the information track, is being focused onto a photo detector arrangement and being evaluated. However, it is within the scope of this invention to be used on other forms of optical recording medium having information tracks in layers, like those in card or tape form; and regardless of whether the access principle is of a reflective or of a transductive type.

### BRIEF DESCRIPTION OF THE DRAWINGS

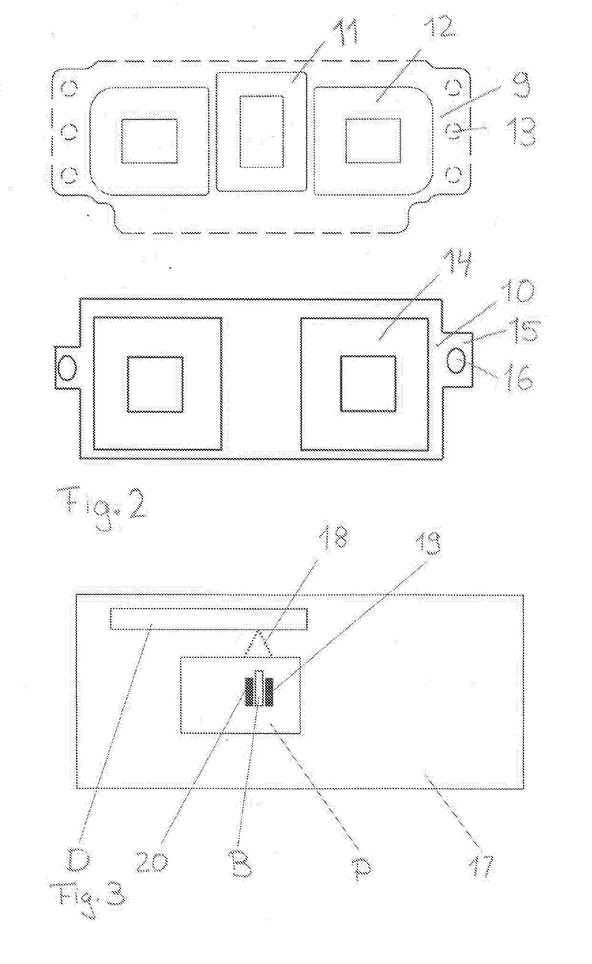

The invention will be explained in more detail using one embodiment, illustrated in Figures 2 and 3.

In the Figures:
- Figure 1: shows a flat board unit with three printed circuit boards of a pickup, known by the applicant;
- Figure 2: shows a flat board unit with two printed circuit boards of a pickup according to one embodiment of the invention; and
- Figure 3: shows a drive for accessing moving storage media according to the embodiment of the invention.

### DETAILED DESCRIPTION OF AN EMBODIMENT OF THE INVENTION

With reference to the Figures 2 and 3, a pickup P for accessing moving storage media, namely a disk D, according to the invention has a flat board unit B, which has a first printed circuit board 9 and a second printed circuit board 10.

The first printed circuit board 9 corresponds to the second layer 2 of the known state of art as shown in Figure 1. The first printed circuit board 9 comprises two faces with coils 11, 12, a front face, shown in Figure 2, and an identically shaped back face, occluded in Figure 2. The faces each comprise a middle tracking coil 11 and two focus coils 12 at opposite sides of the tracking coil 11. The coils 11, 12 of the first printed circuit board 9, which are coils 11, 12 of a first type, are constituted as fine pattern coils and have a first, high sensitivity.

Figure 2 shows that the first printed circuit board 9 has three pairs of openings 13, where the openings 13 of each pair are arranged at opposite sides of the printed circuit board 9 on top of each other.

The second printed circuit board 10 comprises two faces with coils 14 at its front and back side, respectively. The faces each comprise two tilt coils 11, which are arranged symmetrically to a vertical middle axis, not depicted in Figure 2. The coils 14 of the second printed circuit board 10, which are coils 14 of a second type, are constituted as etched coils and have a second, lower sensitivity than the first sensitivity.

The second printed circuit board 10 is constituted as a flexible board made by an elastic material. The second printed circuit board 10 is thinner than the first printed circuit board 9.

Figure 2 also shows that the second printed circuit board 10 is smaller than the first printed circuit board 9. The second printed circuit board 10 has projections 15 with openings 16 at its opposite sides. The openings 16 of the second printed circuit board correspond to the openings 13 of the middle pair of openings 13 of the first printed circuit board 9. In other words, when the printed circuit boards 9, 10 are assembled to the flat board unit B, the openings 16 fit with the middle pair of the openings 13 in order to receive and fix suspension elements, namely suspension wires. While assembling, the second printed circuit board 10 is aligned in reference to the first printed circuit board 9 at the openings 16. Both printed circuit boards 9, 10 are assembled by gluing them surface to surface.

The flat board unit B according to the invention only comprises two printed circuit boards 9, 10 instead of three layers 1, 2, 3 of a printed circuit board unit of the known state of art, shown in Figure 1. The overall weight of the flat board unit B is reduced by reduction of the number of parts and by the low weight of the second printed circuit board 10.

Figure 3 shows a drive 17 for accessing moving storage media, namely a disk D, according to the invention. The disk D is arranged in the drive 17 in either a removable or non-removable manner. The drive 17 is provided with the pickup P described above, which accesses the moving disk D. The access is indicated by dotted lines 18. The pickup comprises a first unit with the flat board unit B and a lens, not shown in Figure 3, and a second unit with a magnetic circuit, having two parallel magnets 19, 20.

In this embodiment the first unit is constituted as a movable unit, which is connected to the second, fixed unit with the magnets 19, 20 by the suspension elements, not shown in Figure 3, e.g. by suspension wires. The suspension elements are soldered at the openings 13 and 16 of both printed circuit boards 9 and 10. The flat board unit B is movably arranged in a magnetic field generated by the two magnets 19, 20.

The suspension elements, e.g. suspension wires, extend in an information direction orthogonal to the tracking direction and the focus direction from the fixed unit to the flat board unit B. In this embodiment the suspension elements are arranged at one side of the flat board B, not shown in Figure 3.

As an alternative, the suspension elements are arranged at two opposite sides of the flat board unit B.

As an alternative, the first unit with the flat board unit B is constituted as a fixed unit and the second unit with magnets 19, 20 is constituted as a movable unit.

A pickup P according to this invention can be used in the so-called slide or sled design of optical media drives, where it is shiftably fitted to a frame structure of the drive, with appropriate linear driving means for realising the shift, such as linear motors or a motor driven threaded rod. Alternatively, the pickup P according to this invention is also usable in the so-called swivel arm design, where it is pivotably mounted on the end of an arm having a pivoting axis parallel to the focus direction. In this way, the pickup P is movable across the tracks, on the surface of the disk D, along an arc which has its main extension in the tracking direction.

## Claims

1. A pickup (P) for accessing moving storage media (D),
the pickup (P) having a flat board unit (B) carrying coils (11, 12, 14), the flat board unit (B) constituted by at least two printed circuit boards (9, 10),
the pickup (P) **characterised in that** at least one first printed circuit board (9) carries at least one coil (11, 12) of a first type of coils (11, 12) having a first sensitivity, and at least one second printed circuit board (10) carries at least one coil (14) of a second type of coils (14) having a second sensitivity lower than the first sensitivity.

2. The pickup according to claim 1, where the coils (14) of the second type are constituted as etched printed coils.

3. The pickup according to claim 1 or 2, where the coils (11, 12) of the first type are constituted as fine pattern coils.

4. The pickup according to claim 3, where the coils (11, 12) of the first type are constituted as tracking coils (11) and focus coils (12), and the coils (14) of the second type are constituted as tilt coils (14).

5. The pickup according to one of the claims 1 to 4, where the second printed circuit boards (10), with the coils (14) of the second type, are constituted as flexible boards.

6. The pickup according to one of the claims 1 to 5, where the pickup (P) has a movable part and a fixed part and where the movable part comprises the flat board unit (B).

7. The pickup according to claim 6, where at least two printed circuit boards (9, 10) of the flat board unit (B) each have at least one pair of openings (13, 16) for suspension elements at opposite sides, and where the pairs of openings (13, 16) correspond to each other in order to align the printed circuit boards (9, 10).

8. A moving storage media drive (17) **characterised in that** it has a pickup (P) according to one of the claims 1 to 7.
